# EUROPEAN PATENT APPLICATION

(11) **EP 4 144 984 A1**
(43) Date of publication of application: **08.03.2023**
(21) Application number: 21938137.3
(22) Date of filing: 30.07.2021
(51) Int. Cl.: F03B 13/00, F03B 11/00

(54) **WATER FLOW POWER GENERATION DEVICE**

(30) Priority: 23.07.2021 CN 202110837963
(71) Applicant: Shenzhen University, Shenzhen, Guangdong 518000 (CN)
(72) Inventor: FAN, Ping, Shenzhen Guangdong 518060 (CN); LIANG, Guangxing, Shenzhen Guangdong 518060 (CN); ZHENG, Zhuanghao, Shenzhen Guangdong 518060 (CN); LUO, Jingting, Shenzhen Guangdong 518060 (CN)
(74) Representative: Tahtadjiev, Konstantin
(86) International application number: PCT/CN2021/109774
(87) International publication number: WO 2023/000374

(57) **Abstract**

A water flow power generation device includes a supporting frame, a carrying platform, a power generation assembly, a speed-increasing gear box and an impeller blade assembly, wherein the supporting frame is located on one side of water flow, the carrying platform is arranged on the supporting frame, and the power generation assembly, the speed-increasing gear box and the impeller blade assembly are arranged on the carrying platform, the impeller blade assembly includes a rotating shaft connected with the speed-increasing gear box and a plurality of impeller blades uniformly arranged at one end of the rotating shaft away from the peed-increasing gear box, the impeller blades are in contact with the water flow and are driven by the water flow to rotate. The carrying platform can be adjusted to move up and down, so that the contact area of the impeller blade assembly and the water flow is adjusted, water energy can be utilized to the maximum extent, and the service life of the impeller blade assembly is prolonged. The water flow power generation device is able to greatly simplify the complexity of a hydroelectric generation system, the manufacturing cost is reduced, and industrialization popularization is easier to achieve.

## Description

### BACKGROUND OF THE PRESENT INVENTION

### FIELD OF INVENTION

The present invention relates to the technical field of hydroelectric power generation, and more particularly to a water flow power generation device.

### DESCRIPTION OF RELATED ARTS

Hydropower is an inexhaustible and renewable clean energy. However, in order to effectively utilize natural water energy, a large dam that can concentrate water flow should be built in a place with an obvious drop of water, and then the potential energy generated by the drop of water to drive a turbine to rotate to generate electricity. As we all know, hydropower is generated when water flow of rivers, lakes etc. at a higher position with a potential energy drops from the higher position to a lower position, so that the potential energy is then converted into the kinetic energy of a turbine which is used to provide a motive force for driving a generator to generate electricity.

Although the efficiency of hydropower generation is high, the cost of power generation is low, the power generation systems starts quickly, and the adjustment is easy, the realization of hydropower generation through the construction of large-scale dams not only requires a relatively large investment, but also takes a relatively long construction time period. In addition, the current conventional turbines are all set at the same fixed height, so that when the water level is relatively high, the impacts of water on the impellers of the turbines will be too large that it may result in a short service life, and when the water level is relatively low, the potential energy generated is not enough to drive the turbines to normally work, and the water energy utilization rate is low.

Therefore, the existing technology still needs to be improved and developed.

### SUMMARY OF THE PRESENT INVENTION

In view of the above mentioned deficiencies in the prior art, the object of the present invention is to provide a water flow power generation device to solve the problems of the large investment of hydroelectric generators and the long construction period in the prior art as well as the short service life of the hydroelectric turbines and the low utilization rate of water energy resulted from the setting of equal fixed heights of the turbines.

The present invention provides a water flow power generation device comprising:a supporting frame disposed at one side of water flow; a carrying platform provided on the supporting frame; a power generation assembly; a speed-increasing gear box; and an impeller blade assembly, wherein the power generation assembly, the speed-increasing gear box and the impeller blade assembly are provided on the carrying platform, wherein the impeller blade assembly comprises a rotating shaft which is coupled to the speed-increasing gear box, and a plurality of impeller blades evenly disposed on the rotating shaft at an end thereof away from the speed-increasing gear box, wherein the plurality of impeller blades is arranged to be in contact with the water flow and is adapted for being driven to rotate by the water flow.

In the water flow power generation device, wherein the supporting frame comprises two supporting columns which are spaced apart from each other, wherein the carrying platform is located between the two supporting columns, wherein a top end of each of the two supporting columns is provided with a pulley and a hoisting motor, wherein each of the hoisting motors is connected with a steel wire, and the steel wire, which passes through the pulley, is connected to the carrying platform, wherein the carrying platform is capable of moving up and down along the supporting columns under the driving of the hoisting motors.

In the water flow power generation device, wherein opposite inner sides of the two supporting columns are respectively provided with a plurality of hooking teeth, wherein two sides of the carrying platform are respectively provided with braking structures each comprising an hook rotatably arranged on the carrying platform and adapted to engaged with the corresponding hooking teeth, one end of the hook is connected with a spring, and the other end of the hook is coupled with a hydraulic driving mechanism.

In the water flow power generation device, wherein the carrying platform is provided with a restricting plate for restricting the rotation angle of the hook.

In the water flow power generation device, wherein the supporting frame is an elevating support which comprises a top beam, a bottom plate, a plurality of hydraulic struts disposed between the top beam and the bottom plate, and wherein a plurality of cross brace bars is disposed on the bottom plate for stabilizing the top beam.

In the water flow power generation device, wherein a movable base is disposed in the carrying platform, wherein the power generation assembly, which is provided on the movable base, comprises a generator shaft connected with the speed-increasing gear box, and a power generator coupled with the generator shaft.

In the water flow power generation device, wherein the rotating shaft is mounted with at least two the impeller blades.

In the water flow power generation device, wherein each of the impeller blades has a shape which is selected from the group consisting of a paddle shape with a narrow upper portion and a wide lower portion, a flat shape, and a conical shape.

In the water flow power generation device, wherein each of the impeller blades is rotatably provided on the rotating shaft.

In the water flow power generation device, wherein each of the impeller blades is coated with an anti-corrosion coating.

The present invention is advantageous in that in comparison with the prior art, the water flow power generation device of the present invention comprises a supporting frame, a carrying platform, a power generation assembly, a speed-increasing gear box and an impeller blade assembly, wherein the supporting frame is located on one side of water flow, the carrying platform is arranged on the supporting frame, and the power generation assembly, the speed-increasing gear box and the impeller blade assembly are arranged on the carrying platform, the impeller blade assembly includes a rotating shaft connected with the speed-increasing gear box and a plurality of impeller blades uniformly arranged at one end of the rotating shaft away from the peed-increasing gear box, the impeller blades are in contact with the water flow and are driven by the water flow to rotate. The carrying platform can be adjusted to move up and down, so that the contact area of the impeller blade assembly and the water flow is adjusted, water energy can be utilized to the maximum extent, and the service life of the impeller blade assembly is prolonged. The water flow power generation device is able to greatly simplify the complexity of a hydroelectric generation system, the manufacturing cost is reduced, and industrialization popularization is easier to achieve.

### BRIEF DESCRIPTION OF THE DRAWINGS

Fig. 1 is a front view of a water flow power generation device of the present invention.
Fig. 2 is a perspective view of the water flow power generation device of the present invention.
Fig. 3 is an enlarged schematic view illustrating braking structures and hooking teeth being in an engaged state according to the water flow power generation device of the present invention.
Fig. 4 is an enlarged schematic view illustrating the braking structures and the hooking teeth being in a disengaged state according to the water flow power generation device of the present invention
Fig. 5 is a perspective view of another water flow power generation device of the present invention.
Fig. 6 is a schematic view illustrating a power generation assembly and an impeller blade assembly supported on a carrying platform of the present invention.
Fig. 7 is a perspective view illustrating the impeller blade assembly of the present invention.
Fig. 8 is a schematic view illustrating the structure of the conical impeller of the present invention.

### DETAILED DESCRIPTION OF THE PREFERRED EMBODIMENT

The present invention provides a water flow power generation device which will be discussed in further details in the following description to clearly and specifically illustrate the purpose, technical solution and effect of the present invention. It should be understood that the specific embodiments described herein are only used to explain the present invention, but not to limit the present invention.

The conventional hydroelectric power generation device generally employs the turbines at the position such as the reservoir, dam and hydropower station where the water flow can be concentrated to form a height difference. But usually, the turbine is wrapped by a housing layer, and the water flow is introduced into the impeller through a pipeline. The structure is relatively complex, and it is not convenient for decentralized use, and the construction of reservoirs, dams, hydropower stations, etc. is expensive and the construction time period is long. In addition, due to the equal height setting of the turbines, the service life of the turbines and the utilization rate of water energy are seriously affected. More specifically, when the precipitation is abundant and the water level is high, the impact forces on the impellers in the turbines are large, and the impellers are in an extreme bearing state for a relatively long time, resulting in the short service life of the impellers; when the water level is low, there is not enough potential energy to drive the impellers to rotate, so that the water energy will not be used at this time, resulting in the problem of low water energy utilization rate.

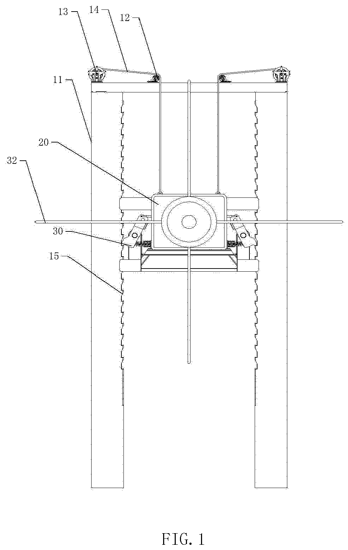

In view of above, the present invention provides a water flow power generation device, as shown in Fig. 1 to Fig. 6, which comprises a supporting frame 10 located on one side of the water flow, a carrying platform 20 provided on the supporting frame 10, and a power generation assembly, a speed-increasing gear box 52 and an impeller blade assembly disposed on the carrying platform 20. The impeller blade assembly comprises a rotating shaft 31 connected with the speed-increasing gear box 52, and a plurality of impeller blades 32 which is evenly disposed on the rotating shaft 31 at an end thereof which is away from the speed-increasing gear box 52, the impeller blades 32 are in contact with the water flow and will rotate under the driving of the water flow.

In the present invention, the supporting frame 10 comprises two spacedly apart supporting columns 11, and the carrying platform 20 is located between the two supporting columns 11, a top end of each of the two supporting columns 11 is provided with a pulley 12 and a hoisting motor 13, the hoisting motor 13 is connected with a steel wire 14, and the steel wire 14, which passes through the pulley 12, is connected to the carrying platform 20, so that the carrying platform 20 can move up and down along the supporting columns 11 under the driving of the hoisting motor 13.

In other words, the water flow power generation device of the present invention can move the carrying platform 20 up and down according to the water level, so as to adjust the contact depth or contact area between the impeller blades 32 and the water flow. In response to the change of the water levels in the flood season and the dry season, the maximum contact area can be maintained between the impeller blades 32 and the water flow by adjusting the upward and downward movement of the carrying platform 20, so as to obtain the maximum hydrokinetic energy and convert the hydrokinetic energy into electrical energy. The water power generation device of the present invention also greatly simplifies the complexity of the water power generation system, so as to reduce the manufacturing cost and thus it will be easier to realize the promotion of industrialization.

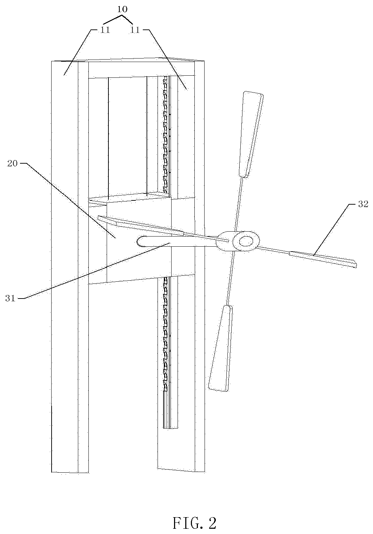

In some embodiments, as shown in Figs. 2 to 4, the opposite inner sides of the two supporting columns 11 are respectively provided with a plurality of hooking teeth 15, and the two sides of the carrying platform 20 are respectively provided with braking structures 30 each comprising an hook 21 rotatably arranged on the carrying platform 20 and adapted to engaged with the corresponding hooking tooth 15, one end of the hook 21 is connected with a spring 22, and the other end of the hook 21 is coupled with a hydraulic driving mechanism 23, the carrying platform 20 is also provided with a restricting plate 24 for restricting the rotation angle of the hook 21.

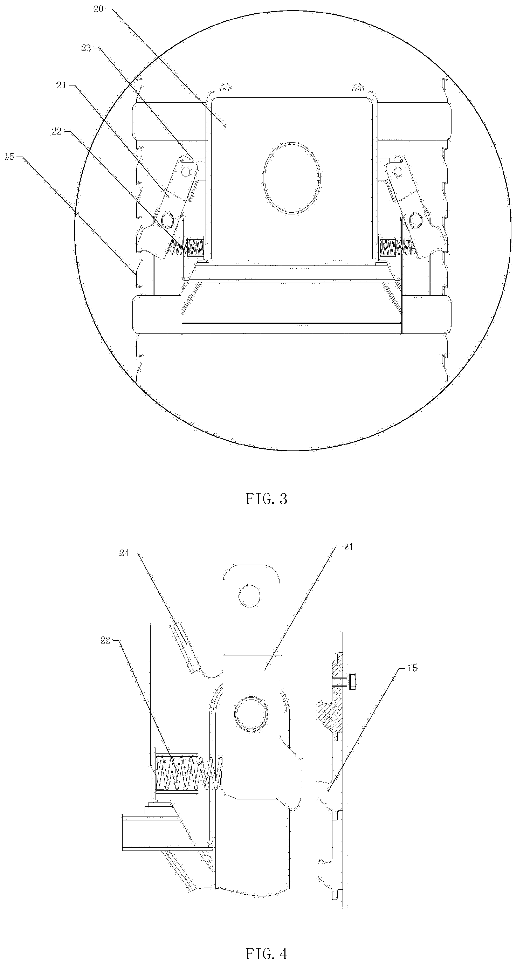

In this embodiment, when the carrying platform 20 needs to drive the impeller blade assembly to move up and down, the hydraulic driving mechanism 23 is first activated to drive the hydraulic rod to extend outward, and the hydraulic rod drives the hook 21 to rotate clockwise to gradually compress the spring 22 connected to the other end of the hook 21 until the hook 21 and the hooking tooth 15 reach a completely disengaged state as shown in Fig. 4, and then the operation of the hydraulic driving mechanism 23 is stopped. The up and down movement position of the carrying platform 20 can be adjusted by starting the hoisting motor 13 to release the steel wire 14 or roll up the steel wire 14. When the carrying platform 20 is moved to a target position, the hoisting motor 13 is turned off and the hydraulic driving mechanism 23 is started to withdraw the hydraulic rod, the hydraulic rod drives the hook 21 to rotate counterclockwise, so that the spring 22 connected to the other end of the hook 21 is gradually released and stretched until the hook 21 and the corresponding hooking teeth 15 reach the engaged state as shown in Fig. 3, the hydraulic driving mechanism 23 is then turned off, and the carrying platform 20 is stably fixed at the target position at that time.

More specifically, when the water level of the river bed is higher than a set value, in this embodiment, the carrying platform is pulled away from the water surface through the cooperation of the braking structures and the hoisting motors, and the carrying platform is maintained with a predetermined distance away from the water surface. When the water level of the river bed is lower than the set value, the carrying platform can also be released toward the water surface through the cooperation of the braking structures and the hoisting motors, so as to maintain the carrying platform at a position with the predetermined distance away from the water surface. The fixed predetermined distance maintained between the carrying platform and the water surface should be determined according to requirements.

It should be noted that when the hoisting motors lift or lower the carrying platform, the power generation assembly and the impeller blade assembly will move along with the movement of the carrying platform, so as to achieve the object of adjusting the size of the contact surface between the impeller blade assembly and the water flow according to the change of the water levels.

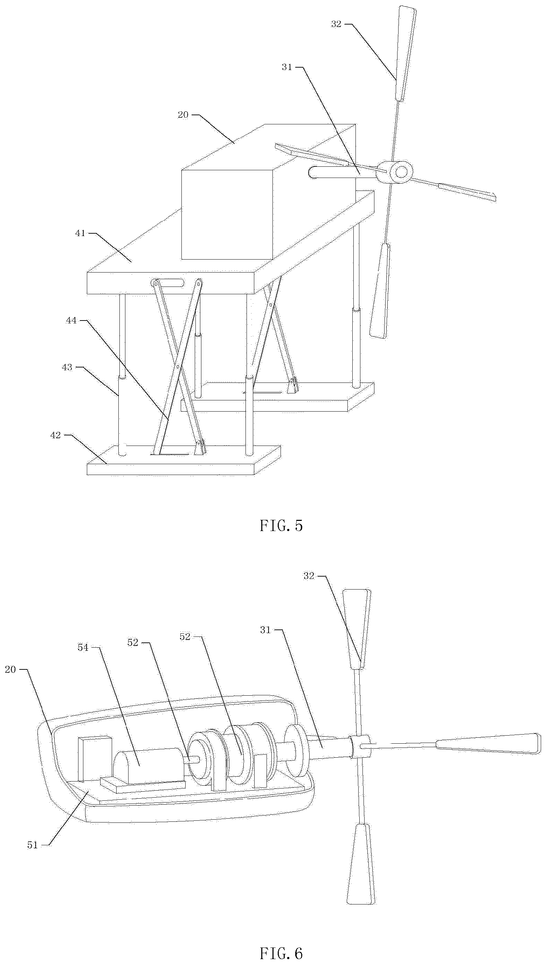

In some embodiments, a water flow power generation device with another structure is also provided, as shown in Fig. 5, the water flow power generation device comprises an elevating support, the carrying platform 20 is located on the elevating support, and the carrying platform 20 is provided with a power generation assembly and an impeller blade assembly. As shown in Fig. 5, the elevating support comprises a top beam 41, a bottom plate 42, a plurality of hydraulic struts 43 disposed between the top beam 41 and the bottom plate 42, and a plurality of cross brace bars 44 disposed on the bottom plate 42 for stabilizing the top beam 41.

In this embodiment, each hydraulic strut 43 is driven by a hydraulic motor, and the hydraulic motor can drive the corresponding hydraulic strut 43 to perform telescopic motion, and the telescopic motion of each hydraulic strut 43 can drive the top beam 41 to move up and down, so that the carrying platform located on the top beam 41 can be moved up and down. In other words, this embodiment can also achieve the purpose of maintaining the maximum contact area between the impeller blades and the water flow by adjusting the up and down movement of the carrying platform, thereby obtaining the maximum hydrokinetic energy and converting the hydrokinetic energy into electrical energy. In this embodiment, the plurality of cross brace bars 44 play the role of stably supporting the up and down movement of the top beam 41.

In some embodiments, as shown in Fig. 6, a movable base 51 is provided in the carrying platform 20, the power generation assembly and the speed-increasing gear box 52 are provided on the movable base 51. The power generation assembly comprises a generator shaft 53 connected with the speed-increasing gear box 52, and a power generator 54 connected with the generator shaft 53 .

In this embodiment, since the power generation assembly and the speed-increasing gear box 52 are located on the movable base 51, the movable base 51 can also drive the power generation assembly, the speed-increasing gear box 52 and the impeller blade assembly to move with a certain distance along the horizontal direction to adapt to the situation when the river is getting narrowed, so that by adjusting the movement of the impeller blade assembly in the horizontal direction, the impeller blades of the impeller blade assembly can be in contact with the water flow to realize hydroelectric power generation.

In this embodiment, the speed-increasing gear box 52 comprises a large gear and a small gear which are engaged with each other, one end of the rotating shaft is coupled to the large gear while one end of the generator shaft is coupled to the small gear. When the impeller blade assembly rotates, the small gear connected to the generator shaft is driven by the large gear which is coupled to the rotating shaft, so that the rotational speed of the power generator can be increased and the torque can be reduced.

In some embodiments, at least two blades, but not limited thereto, are disposed on the rotating shaft. In some examples, the rotating shaft may be provided with two, three, four, five, six or other number of impeller blades.

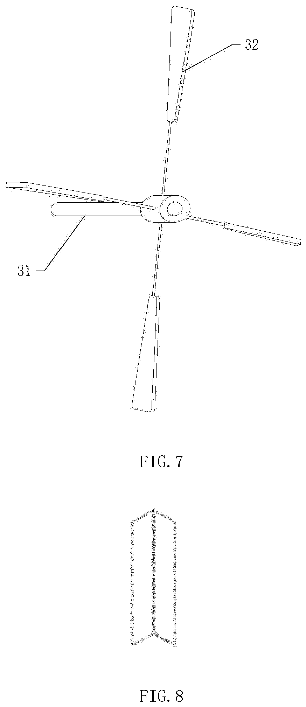

In some embodiments, each of the impeller blades is one of, but not limited to, a paddle shape with a narrow upper portion and a wide lower portion, a flat shape, and a conical shape. As an example, as shown in Fig. 7, four paddle-shaped blades are evenly arranged on the rotating shaft, that is, the impeller blades are arranged at every 90° intervals on the rotating shaft. In this embodiment, each of the impeller blades is preferably to be constructed to have the paddle shape with a narrow upper portion and a wide lower portion.

As shown in Fig. 8, each impeller blade is conical, and each conical impeller blade is composed of two flat plates forming an included angle, and the included angle is but not limited to 30°-120°.

In some embodiments, the impeller blades are rotatably arranged on the rotating shaft. In other words, the impeller blades can rotate, and when the operation of power generation is stopped, each impeller blade can be moved to allow its blade plane to be parallel to the direction of the water flow, so that the water flow resistance is relatively small when the machine is stopped, so that it is convenient for braking.

In some embodiments, each impeller blade is provided with an anti-corrosion coating. Since the impeller blades are in a humid environment all the year round, coating the anti-corrosion coatings on the surfaces of the impeller blades can reduce the degree of corrosion of the impeller blades by water, so as to prolong the service life of the impeller blades.

To sum up, the water flow power generation device of the present invention comprises a supporting frame located on one side of the water flow, a carrying platform arranged on the supporting frame, and a power generation assembly and an impeller blade assembly disposed on the carrying platform, the impeller blade assembly comprises a rotating shaft coupled with the power generation assembly, and a plurality of impeller blades evenly arranged at one end of the rotating shaft away from the power generation assembly, the impeller blades are in contact with the water flow and rotate under the driving of the water flow. The present invention can adjust the contact area between the impeller blade assembly and the water flow by adjusting the up and down movement of the carrying platform, so as to maximize the utilization of water energy and prolong the service life of the impeller blade assembly. The water flow power generation device of the present invention greatly simplifies the complexity of the hydroelectric power generation system, reduces the manufacturing cost and makes it easier to realize industrial popularization.

It should be understood that the embodiments described above are exemplary only and not intended to be limiting. A person of ordinary of skilled in the art should understand that any improvements and modifications can be made based on the spirit of the above description, and all these improvements and modifications should belong to the scope of the appended claims of the present invention.

## Claims

1. A water flow power generation device, comprising:
a supporting frame disposed at one side of water flow;
a carrying platform provided on said supporting frame;
a power generation assembly;
a speed-increasing gear box; and
an impeller blade assembly, wherein said power generation assembly, said speed-increasing gear box and said impeller blade assembly are provided on said carrying platform, wherein said impeller blade assembly comprises a rotating shaft which is coupled to said speed-increasing gear box, and a plurality of impeller blades evenly disposed on said rotating shaft at an end thereof away from said speed-increasing gear box, wherein said plurality of impeller blades is arranged to be in contact with the water flow and is adapted for being driven to rotate by the water flow.

2. The water flow power generation device according to claim 1, wherein said supporting frame comprises two supporting columns which are spaced apart from each other, wherein said carrying platform is located between said two supporting columns, wherein a top end of each of said two supporting columns is provided with a pulley and a hoisting motor, wherein each of said hoisting motors is connected with a steel wire, and said steel wire, which passes through said pulley, is connected to said carrying platform, wherein said carrying platform is capable of moving up and down along said supporting columns under the driving of said hoisting motors.

3. The water flow power generation device according to claim 2, wherein opposite inner sides of said two supporting columns are respectively provided with a plurality of hooking teeth, wherein two sides of said carrying platform are respectively provided with braking structures each comprising an hook rotatably arranged on said carrying platform and adapted to engaged with said corresponding hooking teeth, one end of said hook is connected with a spring, and the other end of said hook is coupled with a hydraulic driving mechanism.

4. The water flow power generation device according to claim 3, wherein said carrying platform is provided with a restricting plate for restricting the rotation angle of said hook.

5. The water flow power generation device according to claim 1, wherein said supporting frame is an elevating support which comprises a top beam, a bottom plate, a plurality of hydraulic struts disposed between said top beam and said bottom plate, and wherein a plurality of cross brace bars is disposed on said bottom plate for stabilizing said top beam.

6. The water flow power generation device according to claim 1, further comprising a movable base disposed in said carrying platform, wherein said power generation assembly, which is provided on said movable base, comprises a generator shaft connected with said speed-increasing gear box, and a power generator coupled with said generator shaft.

7. The water flow power generation device according to claim 1, wherein said rotating shaft is mounted with at least two said impeller blades.

8. The water flow power generation device according to claim 7, wherein each of said impeller blades has a shape which is selected from the group consisting of a paddle shape with a narrow upper portion and a wide lower portion, a flat shape, and a conical shape.

9. The water flow power generation device according to claim 7, wherein each of said impeller blades is rotatably provided on said rotating shaft.

10. The water flow power generation device according to claim 1, wherein each of said impeller blades is coated with an anti-corrosion coating.
